Europäisches Patentamt

European Patent Office

Office européen des brevets

(19)

(11) **EP 0 732 304 B1**

(12) **FASCICULE DE BREVET EUROPEEN**

(45) Date de publication et mention
de la délivrance du brevet:
**26.01.2000 Bulletin 2000/04**

(51) Int Cl.[7]: **C01F 5/24**, C01F 11/18,
C04B 2/08

(21) Numéro de dépôt: **96200505.4**

(22) Date de dépôt: **27.02.1996**

(54) **Procédé de production de dérivés du magnésium**

Verfahren zur Herstellung von Magnesiumverbindungen

Process for the preparation of magnesium compounds

(84) Etats contractants désignés:
**AT BE DE ES FR GB IT**

(30) Priorité: **10.03.1995 IT MI950469**

(43) Date de publication de la demande:
**18.09.1996 Bulletin 1996/38**

(73) Titulaire: **SOCIETA GENERALE PER
L'INDUSTRIA DELLA MAGNESIA, S.p.A.
21021 Angera (VA) (IT)**

(72) Inventeur: **Rosa, Roberto
I-21021 Angera (VA) (IT)**

(74) Mandataire: **Anthoine, Paul et al
SOLVAY S.A.,
Département de la Propriété Industrielle,
Rue de Ransbeek, 310
1120 Bruxelles (BE)**

(56) Documents cités:
**EP-A- 0 010 643        WO-A-83/02109
DE-C- 852 670        FR-A- 2 298 512
US-A- 3 402 017**

- **CHEMICAL ABSTRACTS, vol. 81, no. 26, 30
  Décembre 1974 Columbus, Ohio, US; abstract
  no. 172434h, B.A.SHOIKHET: "Magnesium
  bicarbonate solution." page 177; XP002005903 &
  SU-A-406 802 21 Novembre 1973**
- **CHEMICAL ABSTRACTS, vol. 82, no. 22, 2 Juin
  1975 Columbus, Ohio, US; abstract no. 142237z,
  page 133; XP002005904 & RO-A-56 782 30 Mars
  1974**

## Description

L'invention se rapporte à un nouveau procédé pour la production de dérivés légers du magnésium.

Ces dérivés trouvent une utilisation dans différents domaines de la technique, une des utilisations principales étant en pharmacie où on comprend facilement que la pureté requise est très elevée.

Les procédés industriels visant à obtenir ces composés doivent donc comporter un contrôle soigné des conditions de travail pour pouvoir obtenir des puretés de l'ordre de 99,9 % ou plus.

Comme il arrive souvent dans ces cas, la pureté est obtenue au prorata de conditions contraignantes en ce qui concerne les dimensions des appareils et leur nombre, le coût énergétique et souvent aussi la quantité de produits de rebut, difficilement réutilisable, qu'il faut évacuer.

Parmi les dérivés du magnésium dans le domaine pharmaceutique se distingue par importance le carbonate de magnésium (éventuellement basique).

Les sources de départ pour sa production sont multiples. On peut partir par exemple des minéraux riches en chlorure de magnésium, c'est-à-dire de magnésite. Dans un premier cas on peut par exemple exploiter des eaux salines particulièrement concentrées ou de l'eau de mer normale. Ces solutions sont coûteuses et peu avantageuses du point de vue économique.

Une matière première de départ peu coûteuse, abondante et simple à traiter et à transporter est la dolomite.

La dolomite est un minéral dans lequel sont présents en proportions presque égales, carbonate de calcium et carbonate de magnésium. En plus peuvent être présentes des impuretés de natures et de constitutions diverses, notamment des composés de substitution ferreux ou de manganèse.

Le procédé actuel connu de traitement de la dolomite dans le but de parvenir à la production de carbonate de magnésium comprend les étapes suivantes.

La dolomite après avoir été soumise à divers traitements directement dans la carrière d'extraction, comme un lavage, un broyage et un criblage (jusqu'à une granulométrie de 14 à 35 mm), est transférée à l'installation de traitement. Elle y est d'abord soumise à une calcination sélective ou semicalcination; cette calcination sélective consiste à soumettre la dolomite à l'action de la chaleur dans un four rotatif, dans des conditions opératoires (en particulier à une température non supérieure à 800 °C) réglées pour réaliser la transformation du carbonate de magnésium uniquement, en oxyde, laissant plus ou moins intact le composé calcique, avec une production simultanée d'anhydride carbonique gazeux. En réalité une calcination complète du seul carbonate de magnésium est pratiquement impossible dans la dolomite de départ, fragmentée et broyée, car la liaison chimico-cristalline entre le carbonate de calcium et le carbonate de magnésium est tellement forte, qu'elle ne permet pas la calcination du seul carbonate de magnésium sans provoquer un frittage funeste et, par conséquent, indésiré de la dolomite. Ce phénomène est dû à la formation de zones à très haut gradient thermique, dans lesquelles la chaleur n'est pas absorbée par la réaction de calcination et se transforme ainsi en chaleur latente qui surchauffe la dolomite provoquant son frittage. Comme résultat, le produit calciné contient encore du carbonate de magnésium non transformé en oxyde, ce qui abaisse le rendement du procédé et de toutes les étapes opératoires de celui-ci.

Successivement à cette semicalcination, le minéral obtenu, lequel est formé de carbonate de calcium intact, d'oxyde de magnésium et encore d'une fraction importante de carbonate de magnésium non calciné, est soumis à une opération de bicarbonatation. A cet effet, la dolomite semicalcinée, réduite en fine poussière et mise en suspension uniformément dans l'eau, est carbonatée par insufflation de l'anhydride carbonique libéré au cours de la réaction précédente de calcination.

La réaction de l'oxyde de magnésium avec l'eau et l'anhydride carbonique produit du bicarbonate de magnésium qui est récupéré par décantation et filtration de la suspension carbonatée

En réalité même si on a procédé à une dispersion très fine de la dolomite semicalcinée dans l'eau, la dispersion du magnésium dans l'eau est toutefois limitée, de sorte que la fraction d'oxyde de magnésium qui n'a pas réagi est assez importante. A l'issue de la filtration à laquelle on soumet la suspension carbonatée, on obtient donc un résidu qui contient, en plus du carbonate de calcium qui ne participe pas à la réaction de carbonatation, une fraction du magnésium, sous forme de carbonate de magnésium, d'oxyde de magnésium et d'hydroxyde de magnésium, cette fraction étant le résultat des défectuosités cumulées des phases opératoires de traitement de la totalité du magnésium de la matière première soumise au procédé.

Malgré la meilleure optimalisation possible de toutes les phases opératoires mentionnées ci-dessus, le résidu susdit résulte dans chaque cas en carbonate de calcium tellement impur et, en particulier, tellement riche en magnésium sous formes diverses, qu'il ne peut pas être mis dans le commerce.

En jargon commercial, un tel résidu prend le nom de Redolit. La quantité de Redolit produite par kg de carbonate basique de magnésium est de 5 kg.

Le dommage économique et les difficultés inhérentes à la production de Redolit comme résidu de la susdite fabrication ne sont nullement négligeables.

Pour obvier aux problèmes exposés ci-dessus en relation avec la production de carbonate basique de magnésium à partir de dolomite naturelle, on a étudié un procédé, dans lequel on produit une calcination totale de la dolomite, et les deux oxydes formés, à savoir l'oxyde de magnésium ainsi que l'oxyde de calcium sont ensuite hydratés pour former les hydroxydes respectifs. Ensuite on réalise une première insufflation d'anhydride carbonique dans la solution aqueuse contenant les hydroxydes de calcium et de magnésium, avec transformation de l'hydroxyde de calcium en carbonate de calcium et une seconde insufflation d'anhydride carbonique avec transformation de l'hydroxyde de magnésium en bicarbonate de magnésium soluble. A ce moment le carbonate de calcium est séparé de la solution de bicarbonate de magnésium par filtration. Le soluté de bicarbonate de magnésium est transformé en carbonate basique de magnésium par réchauffement de la solution qui le contient.

Ce procédé produit du carbonate de calcium de pureté suffisante pour pouvoir être mis dans le commerce, résolvant ainsi partiellement les problèmes écologiques mentionnés ci-dessus.

En réalité même ce procédé présente des inconvénients. En effet la consommation d'anhydride carbonique dans les deux étapes de carbonatation est particulièrement élevée, à cause de la faible efficacité des deux opérations. Ainsi le volume des appareils et la quantité d'anhydride carbonique qui y circule prennent des valeurs élevées, et influence négativement tous les frais d'installation, aussi bien les frais fixes que les frais variables.

Le but de la présente invention est de redéfinir le procédé de production de carbonate basique de magnésium, de façon à éviter les problèmes susdits et de réduire au minimum les rebuts de la production, en combinant la production du carbonate basique de magnésium avec celle de carbonate de calcium précipité qui soit commercialisable.

Un autre but de l'invention est de définir un procédé qui se particularise par une basse consommation énergétique et des dimensions réduites des appareils et qui minimise le rapport entre la quantité de dolomite utilisée comme matière première de départ et la quantité de carbonate basique de magnésium produit.

On a trouvé que si, dans un procédé pour la production de carbonate basique de magnésium à partir de dolomite qui comprend les étapes opératoires suivantes :

- une calcination totale de la dolomite, avec transformation en CaO et MgO (calciné);
- une hydratation du produit calciné pour former des hydroxydes de calcium et de magnésium;
- une première insufflation d'anhydride carbonique sous forme de gaz pur ou en mélange avec un gaz inerte, dans la solution aqueuse contenant les hydroxydes de calcium et de magnésium, avec transformation de l'hydroxyde de calcium en carbonate de calcium précipité;
- une seconde insufflation d'anhydride carbonique sous forme de gaz pur ou en mélange avec un gaz inerte, dans le mélange recueilli de l'étape précédente, avec transformation de l'hydroxyde de magnésium en bicarbonate de magnésium soluble;
- une filtration du carbonate de calcium précipité et récupération des eaux mères;
- une séparation de carbonate basique de magnésium par réchauffement de la solution des eaux mères de bicarbonate de magnésium,

on réalise au moins la seconde insufflation d'anhydride carbonique en la subdivisant dans au moins deux appareils distincts et en série, le gaz contenant l'anhydride carbonique étant envoyé à contre-courant par rapport à l'alimentation de la solution à carbonater et remontant la série d'appareils susdite, on résout tous les problèmes cités plus haut.

Dans le procédé selon l'invention, l'anhydride carbonique est mis en oeuvre à l'état pur ou en mélange avec un gaz inerte. On entend par gaz inerte un gaz qui ne réagit pas avec la solution aqueuse d'hydroxyde de calcium ou de magnésium. Il peut être par exemple de l'air, de l'azote ou de l'argon. L'air convient bien.

De façon particulière on obtient du carbonate basique de magnésium de pureté élevée, accompagné de carbonate de calcium résiduaire suffisamment pur vis-à-vis d'une contamination par le magnésium, pour pouvoir être mis dans le commerce. En outre le procédé selon l'invention se caractérise par un minimum de gaspillage de ressources, avec une réduction au minimum des consommations énergétiques et des dimensions des appareils employés.

Les appareils dans lesquels on effectue la seconde insufflation sont des réacteurs, qui, dans une forme de réalisation préférée, ont tous le même agencement. Le courant gazeux contenant l'anhydride carbonique alimente la série des réacteurs susdite à contre-courant par rapport à la solution aqueuse.

L'étape de calcination totale selon la présente invention est efficace quand celle-ci est effectuée sur la dolomite finement broyée. En particulier la granulométrie de la dolomite broyée a une valeur préférée comprise entre 14 et 20 mm. En général les opérations auxquelles la dolomite est soumise sur le chantier comprennent déjà un premier broyage. Ce premier broyage n'est pas suffisant pour obtenir la granulométrie adéquate pour la réalisation de la présente invention, et il faut dès lors même soumettre la dolomite à un broyage ultérieur et à un criblage jusqu'à la granulométrie préférée, avant de l'introduire dans le four de calcination.

Selon la présente invention, l'étape de calcination totale est effectuée à une température d'au moins 900 °C, de façon à provoquer la décomposition du carbonate de calcium et du carbonate de magnésium en oxydes. De façon très avantageuse cette calcination est réalisée par combustion de gaz méthane. Dans une forme de réalisation préférée de la présente invention, la calcination est effectuée dans un four rotatif.

La description qui suit sert à éclaircir des détails du procédé, au moyen d'exemples non limitatifs de l'invention définie dans les revendications annexées.

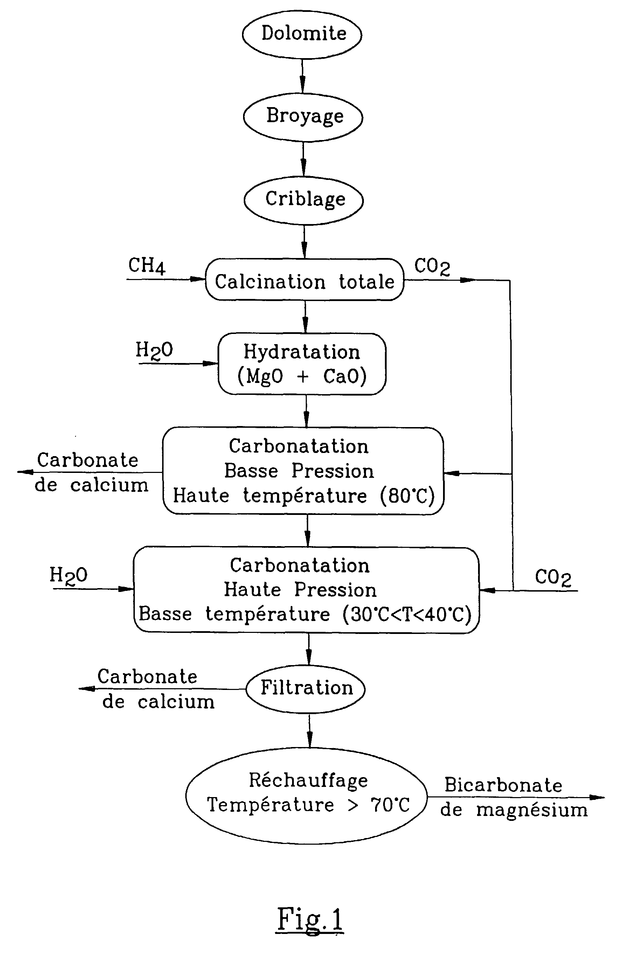

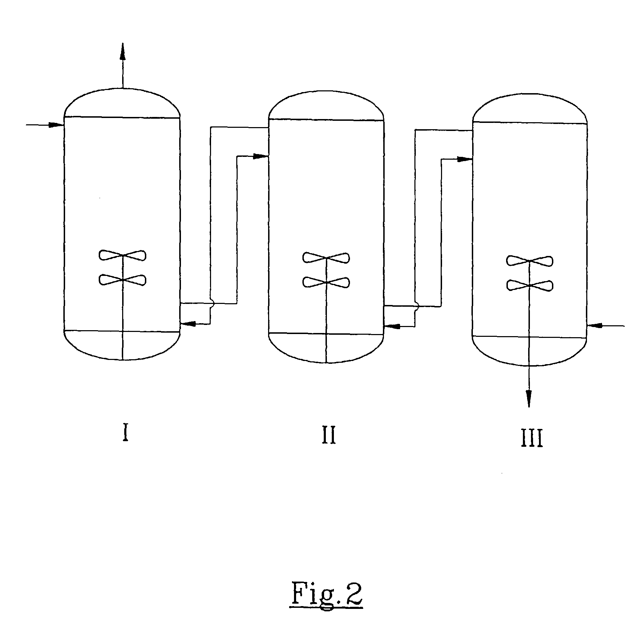

La description se base en particulier sur les dessins ci-joint, dans lesquels la figure 1 montre le schéma général du procédé selon l'invention et la figure 2 représente une partie d'une installation utilisée pour la réalisation de la seconde étape de carbonatation du procédé selon l'invention.

La réaction de calcination est la suivante :

$$CaCO_3 + MgCO_3 + chaleur \rightarrow CaO + MgO + 2CO_2$$

L'anhydride carbonique, $CO_2$, produit par cette réaction est recueilli et envoyé aux réacteurs successifs de carbonatation. En réalité la quantité nécessaire de $CO_2$ dans les réacteurs susdits est stoechiométriquement le double de la quantité produite à la calcination, de sorte qu'on doit pourvoir à une introduction supplémentaire d'anhydride carbonique.

Les oxydes de calcium et de magnésium sont recueillis à l'état hydraté immédiatement à la sortie du four. La réaction d'hydratation est conduite dans un réacteur approprié.

Les oxydes de calcium et de magnésium sont convertis en hydroxydes respectifs par réaction avec de l'eau, donnant lieu à une solution fortement basique (pH ≥ 12). La solution qui est produite dans ce réacteur est dénommée "lait dolomitique".

On a découvert que le procédé selon la présente invention est particulièrement efficace dans le cas où l'hydratation est effectuée en deux étapes distinctes, avec l'alimentation de l'eau répartie entre lesdites deux étapes.

En particulier, dans la première de ces deux étapes, la quantité d'eau ajoutée est telle que la chaleur produite par la réaction exothermique de transformation des oxydes de calcium et de magnésium en hydroxydes est suffisante pour porter le mélange liquide à l'ébullition. Cette situation, dans laquelle la masse liquide est fortement agitée et remélangée avec violence, favorise une conduite optimale de la réaction, la réaction de l'eau avec les oxydes étant réalisée d'une manière très ponctuelle et efficace.

On ajoute ensuite la quantité restante d'eau, avec le double but de diminuer la température du mélange à la valeur préférée d'environ 80 °C et d'amener la concentration de la solution à la valeur désirée. En particulier, dans l'exécution des étapes opératoires successives, il est nécessaire que la concentration pondérale des hydroxydes de calcium et de magnésium soit de 10 à 35 g/l, une valeur de 22 à 27 g/l étant particulièrement préférée. En particulier la solution est recueillie de l'opération d'hydratation à une température d'au moins 80 °C et une concentration de 80 à 120 g/l de CaO et MgO, tandis qu'après la première étape de carbonatation, la concentration de la suspension est portée à une valeur de 17 à 30 g/l de CaO et de MgO.

La température à la sortie de la phase d'hydratation est d'au moins 80 °C.

Un objet de la présente invention est donc aussi l'exécution particulière de l'opération d'hydratation, dans un dispositif de configuration adéquate, ce dispositif constituant aussi un objet de l'invention.

Le dispositif selon l'invention se compose de deux parties ou chambres, par exemple séparées par un diaphragme et présentant un déversoir. Dans la première des deux chambres on réalise la mise en contact du solide finement subdivisé, obtenu de la calcination et contenant l'oxyde de magnésium et l'oxyde de calcium, avec une quantité d'eau suffisante à assurer l'hydratation complète. Comme déjà dit, la chaleur développée par la réaction réchauffe la solution pour la porter à la température d'ébullition, ce qui provoque une forte agitation et un mélange.

L'alimentation en eau et en solide calciné se passe en continu, le déversoir relié au diaphragme réalisant la décharge du surplus de suspension qui se forme progressivement. Le niveau du liquide dans la première chambre est supérieur au niveau du liquide dans la deuxième chambre. Le déversoir relie la première chambre à la seconde, dans laquelle on introduit le complément d'eau nécessaire pour refroidir la solution jusqu'aux environs de 80 °C et porter la concentration en hydroxydes de calcium et de magnésium à la valeur de 80 g/l. La température et la quantité d'eau d'alimentation dans la deuxième chambre sont réglées en fonction de la solution riche en hydroxydes et du point d'ébullition pour obtenir les valeurs citées ci-dessus.

La première étape d'insufflation de l'anhydride carbonique se produit à une température de 60 à 80 °C et à basse pression d'anhydride carbonique, généralement inférieure à un 1 bar. Cette pression doit être réglée, voire éventuellement augmentée si la colonne de solution aqueuse est importante. En pratique cette pression est légèrement supérieure à la pression hydraulique définie de la colonne de solution aqueuse contenue dans le réacteur. La température optimale est comprise entre 77 et 80 °C. Cette opération est exécutée dans un réacteur de type batch de configuration traditionnelle, avantageusement pourvu d'hélices rotatifs et de chicanes pour subdiviser le flux d'anhydride carbonique en bulles les plus fines possible. Ceci naturellement dans le but d'augmenter le plus possible la surface spécifique d'échange.

La deuxième étape d'insufflation de l'anhydride carbonique du procédé selon la présente invention est effectuée en série comme illustré à la figure 2. En détail, dans ce cas le nombre de réacteurs utilisés est 3, ce nombre s'étant révélé le meilleur compromis entre l'efficacité du procédé pour laquelle ce nombre devrait être le plus grand possible et le coût fixe d'implantation qui croît proportionnellement avec ce nombre. Trois est le nombre préféré de réacteurs, quoique des nombres tels que 2, 4, 5 ou supérieurs à 5 constituent des formes de réalisations alternatives, de la présente invention,

A l'intérieur des réacteurs et en particulier près de l'entrée de l'alimentation gazeuse contenant l'anhydride carbonique, sont prévus des systèmes à hélices ou à chicanes pour subdiviser le plus finement possible l'alimentation gazeuse. Ceci a pour effet d'augmenter la surface d'échange entre le gaz et la solution liquide, de façon à maximiser l'efficacité de la réaction.

La particularité du procédé selon l'invention consiste dans l'alimentation de l'anhydride carbonique à contre-courant par rapport au flux de la solution à carbonater. Ceci permet d'exploiter au mieux l'anhydride carbonique.

L'alimentation de l'anhydride carbonique au dernier des réacteurs de carbonatation a lieu à haute pression pour vaincre toutes les pertes de charge dans la série de réacteurs. En outre l'alimentation est naturellement riche en anhydride carbonique, les deux facteurs cités, c'est-à-dire la haute pression de l'alimentation et la haute concentration ou, mieux, la haute pression partielle de l'anhydride carbonique favorisent une bonne efficacité de la réaction. En effet la solution à carbonater, présente dans le dernier réacteur, est substantiellement pauvre en hydroxyde de magnésium, de sorte que son épuisement par réaction est possible seulement en présence d'une grande quantité d'anhydride carbonique.

Au contraire dans le premier de la série des réacteurs, la solution encore riche de tout l'hydroxyde de magnésium rencontre un courant gazeux pauvre en anhydride carbonique et à pression réduite; dans ces conditions il est possible d'exploiter presque tout l'anhydride carbonique présent dans le courant gazeux.

L'anhydride carbonique alimenté en mélange avec un gaz inerte, par exemple de l'air, est introduit dans le dernier des réacteurs à une concentration d'environ 30 à 40 % en terme volumétrique, et à une pression de 3 à 4 bar. Il sort du premier réacteur à une pression de 1,5 bar et à une concentration proche de 10 à 13 % en terme volumétrique.

La solution à traiter est mise en oeuvre à une température de 30 à 40 °C et sort du dernier des réacteurs à une température supérieure de 3 à 8 degrés par rapport à la température d'introduction.

Le fonctionnement de la série d'étapes, proposée selon la présente invention pour la deuxième carbonatation de la solution contenant l'hydroxyde de magnésium, peut être de type batch, semi batch ou continu. En particulier le fonctionnement en continu permet, par un choix approprié des paramètres de dimension des appareils, d'améliorer l'efficacité des réactions et de toute l'opération. En effet comme déjà exposé, les conditions de réactions peuvent être optimisées par un choix approprié de variables telles que le temps de résidence de la solution dans les réacteurs, les températures (et donc la consommation de vapeur), le compromis entre les dimensions et la productivité de l'installation, de sorte que la pureté et la cristallographie des produits sont améliorées

Les conditions opératoires du procédé selon la présente invention peuvent avantageusement être contrôlées par un système de contrôle central.

## Revendications

1. Procédé pour la production de carbonate basique de magnésium à partir de dolomite naturelle, comprenant les étapes suivantes :

   - une calcination totale de la dolomite, avec transformation en CaO et MgO (calciné)
   - une hydratation du produit calciné pour former des hydroxydes de calcium et de magnésium;
   - une première insufflation d'anhydride carbonique sous forme de gaz pur ou en mélange avec un gaz inerte, dans la solution aqueuse contenant les hydroxydes de calcium et de magnésium, avec transformation de l'hydroxyde de calcium en carbonate de calcium précipité;
   - une deuxième insufflation d'anhydride carbonique sous forme de gaz pur ou en mélange avec un gaz inerte, dans le mélange recueilli de l'étape précédente, avec transformation de l'hydroxyde de magnésium en bicarbonate de magnésium soluble;
   - une filtration du carbonate de calcium précipité et récupération des eaux mères;
   - une séparation de carbonate basique de magnésium par rechauffement de la solution des eaux mères de bicarbonate de magnésium,

   caractérisé en ce que l'hydratation du produit calciné est effectuée en deux étapes distinctes, comprenant une première étape où on met en oeuvre une quantité d'eau réglée pour convertir la totalité du produit calciné et porter la solution à l'ébullition et une seconde étape où on introduit la quantité restante d'eau, et en ce qu'on réalise au moins la deuxième insufflation d'anhydride carbonique en la subdivisant dans au moins deux appareils distincts et en série, le gaz contenant l'anhydride carbonique étant envoyé à contre-courant par rapport à l'alimentation de la solution à carbonater et remontant la série d'appareils susdite.

2. Procédé selon la revendication 1, caractérisé en ce que la solution sort de l'opération d'hydratation à une température d'au moins 80 °C et à une concentration de 80 à 120 g/l de CaO et MgO.

3. Procédé selon la revendication 1 ou 2, caractérisé en ce que la première insufflation d'anhydride carbonique est effectuée à une température comprise entre 60 et 80 °C et à basse pression d'anhydride carbonique, par exemple inférieure à 1 bar.

4. Procédé selon l'une quelconque des revendications 1 à 3, caractérisé en ce qu'à l'intérieur des réacteurs sont disposées des hélices et/ou des chicanes.

5. Procédé selon l'une quelconque des revendications 1 à 4, caractérisé en ce qu'à la deuxième insufflation, l'anhydride carbonique est introduit dans le dernier des réacteurs à une concentration, en terme volumétrique, de 30 à 40 % et à une pression de 3 à 4 bar et la solution à carbonater est introduite dans le premier des réacteurs susdits à une température de 25 à 40 °C.

6. Procédé selon l'une quelconque des revendications 1 à 5 caractérisé en ce que la série susdite de réacteurs fonctionne en continu.

7. Procédé selon l'une quelconque des revendications 1 à 6, caractérisé en ce qu'après la première étape de carbonatation, la concentration de la suspension est portée de 17 à 30 g/l de CaO et de MgO.

8. Procédé selon l'une quelconque des revendications 1 à 7, caractérisé en ce qu'avant d'être soumise à la calcination totale, la dolomite subit une opération de broyage et criblage.

9. Dispositif pour la mise en oeuvre de l'étape d'hydratation selon l'une quelconque des revendications 1 à 8, caractérisé en ce qu'il comprend deux chambres séparées par un déversoir, la première des deux chambres présentant un système d'alimentation en produit calciné et les deux chambres comprenant une conduite d'alimentation en eau, où le niveau du liquide de la première chambre est supérieur au niveau du liquide de la deuxième chambre.

**Patentansprüche**

1. Verfahren zur Herstellung von basischem Magnesiumcarbonat aus natürlichem Dolomit, welches die folgenden Schritte umfasst:

   - ein vollständiges Glühen des Dolomits mit Umwandlung in CaO und MgO (geglüht);
   - eine Hydratisierung des geglühten Produkts, um Calcium- und Magnesiumhydroxide zu bilden;
   - ein erstes Einblasen von Kohlendioxid in Form von reinem Gas oder im Gemisch mit einem Inertgas in die wässrige Lösung, die die Calcium- und Magnesiumhydroxide enthält, mit Umwandlung des Calciumhydroxids in gefälltes Calciumcarbonat;
   - ein zweites Einblasen von Kohlendioxid in Form von reinem Gas oder im Gemisch mit einem Inertgas in das aus dem vorangegangenen Schritt gewonnene Gemisch mit Umwandlung des Magnesiumhydroxids in lösliches Magnesiumbicarbonat;
   - eine Filtration des gefällten Calciumcarbonats und Auffangen der Mutterlaugen;

   - eine Abtrennung von basischem Magnesiumcarbonat durch Erhitzen der Lösung der Magnesiumbicarbonatmutterlaugen,

   dadurch gekennzeichnet, daß die Hydratisierung des geglühten Produkts in zwei verschiedenen Schritten ausgeführt wird, die einen ersten Schritt umfasst, bei dem man eine Wassermenge verwendet, die eingestellt ist, um das gesamte geglühte Produkt umzuwandeln und die Lösung zum Sieden zu bringen, und einen zweiten Schritt, bei dem man die restliche Menge Wasser zugibt, und dadurch, daß man wenigstens das zweite Einblasen von Kohlendioxid ausführt, indem man es in wenigstens zwei verschiedene Vorrichtungen in Reihe aufteilt, wobei das das Kohlendioxid enthaltende Gas im Gegenstrom in bezug auf die Beschickung der zu carbonatisierenden Lösung eingeleitet wird und die obengenannte Reihe von Vorrichtungen entgegengesetzt durchläuft.

2. Verfahren gemäß Anspruch 1, dadurch gekennzeichnet, daß die Lösung aus dem Hydratisierungsvorgang mit einer Temperatur von wenigstens 80 °C und mit einer Konzentration von 80 bis 120 g/l CaO und MgO austritt.

3. Verfahren gemäß Anspruch 1 oder 2, dadurch gekennzeichnet, daß das erste Einblasen von Kohlendioxid bei einer Temperatur zwischen 60 und 80 °C und bei niedrigem Kohlendioxiddruck, beispielsweise kleiner als 1 bar, ausgeführt wird.

4. Verfahren gemäß einem der Ansprüche 1 bis 3, dadurch gekennzeichnet, daß im Innern der Reaktoren Schrauben und/oder Ablenkplatten angeordnet sind.

5. Verfahren gemäß einem der Ansprüche 1 bis 4, dadurch gekennzeichnet, daß bei dem zweiten Einblasen das Kohlendioxid in den letzten der Reaktoren mit einer Konzentration von 30 bis 40 Vol.-% und mit einem Druck von 3 bis 4 bar zugeführt wird und die zu carbonatisierende Lösung in den ersten der obengenannten Reaktoren mit einer Temperatur von 25 bis 40 °C zugeführt wird.

6. Verfahren gemäß einem der Ansprüche 1 bis 5, dadurch gekennzeichnet, daß die obengenannte Reaktorenreihe kontinuierlich arbeitet.

7. Verfahren gemäß einem der Ansprüche 1 bis 6, dadurch gekennzeichnet, daß nach dem ersten Carbonatisierungsschritt die Konzentration der Suspension auf 17 bis 30 g/l CaO und MgO gebracht wird.

8. Verfahren gemäß einem der Ansprüche 1 bis 7, dadurch gekennzeichnet, daß der Dolomit, bevor er dem vollständigen Glühen unterzogen wird, einem Vorgang des Mahlens und Siebens unterzogen wird.

9. Vorrichtung für die Durchführung des Hydratisierungsschritts gemäß einem der Ansprüche 1 bis 8, dadurch gekennzeichnet, daß sie zwei durch einen Überlauf getrennte Kammern umfasst, wobei die erste der beiden Kammern ein System zur Beschickung mit geglühtem Produkt aufweist und die beiden Kammern eine Wasserzuflußleitung umfassen, wobei das Flüssigkeitsniveau der ersten Kammer höher als das Flüssigkeitsniveau der zweiten Kammer ist.

**Claims**

1. Process for the production of basic magnesium carbonate from natural dolomite, comprising the following steps:

   - a total calcination of dolomite, with conversion into CaO and MgO (calcined);
   - a hydration of the calcined product to form calcium hydroxide and magnesium hydroxide;
   - a first sparging with carbon dioxide in the form of pure gas or as a mixture with an inert gas, in the aqueous solution containing calcium hydroxide and magnesium hydroxide, with conversion of the calcium hydroxide into precipitated calcium carbonate;
   - a second sparging of carbon dioxide in the form of pure gas or as a mixture with an inert gas, in the mixture collected from the previous step, with the conversion of the magnesium hydroxide into soluble magnesium bicarbonate;
   - a filtration of the precipitated calcium carbonate and recovery of mother liquors;
   - a separation of the basic magnesium carbonate by heating the solution of the magnesium bicarbonate mother liquors,

   characterized in that the hydration of the calcined product is carried out in two separate steps, comprising a first step in which an amount of water is added which is controlled to convert all of the calcined product and to bring the solution to boiling point, and a second step in which the remaining amount of water is added, and in that at least the second sparging with carbon dioxide is carried out by subdividing it in at least two devices which are separate and in series, the gas containing the carbon dioxide being conveyed counter-currentwise relative to the supply of the solution to be carbonated and remounting the abovementioned series of devices.

2. Process according to Claim 1, characterized in that the solution leaves the hydration operation at a temperature of at least 80°C and at a concentration from 80 to 120 g/l of CaO and MgO.

3. Process according to Claim 1 or 2, characterized in that the first sparging with carbon dioxide is carried out at a temperature between 60 and 80°C and at low pressure of carbon dioxide, for example less than 1 bar.

4. Process according to any one of Claims 1 to 3, characterized in that propellers and/or chicanes are placed inside the reactors.

5. Process according to any one of Claims 1 to 4, characterized in that, during the second sparging, the carbon dioxide is introduced into the last of the reactors at a concentration, in volumetric terms, from 30 to 40% and at a pressure of 3 to 4 bar and the solution to be carbonated is introduced into the first of the abovementioned reactors at a temperature from 25 to 40°C.

6. Process according to any one of Claims 1 to 5, characterized in that the abovementioned series of reactors operates continuously.

7. Process according to any one of Claims 1 to 6, characterized in that, after the first step of carbonatation, the concentration of the suspension is raised from 17 to 30 g/l of CaO and of MgO.

8. Process according to any one of Claims 1 to 7, characterized in that, before being subjected to the total calcination, the dolomite undergoes a grinding and screening operation.

9. Device for carrying out the hydration step according to any one of Claims 1 to 8, characterized in that it comprises two chambers separated by a discharger, the first of the two chambers having a system for feeding with calcined product and the two chambers comprising a water supply pipe, in which the level of liquid in the first chamber is higher than the level of liquid in the second chamber.

Fig.1

Fig.2